# EUROPEAN PATENT SPECIFICATION

(11) **EP 3 506 032 B1**
(45) Date of publication and mention of the grant of the patent: **27.07.2022**
(21) Application number: 17020530.6
(22) Date of filing: 13.11.2017
(51) Int. Cl.: G05B 15/02

(54) **APPARATUS FOR CONTROL OF BUILDING MANAGEMENT SYSTEMS, RESIDENTIAL DOMOTICS AND IOT SYSTEMS**
VORRICHTUNG ZUR STEUERUNG VON GEBÄUDEVERWALTUNGSSYSTEMEN, WOHNGEBÄUDEDOMOTIK UND IOT-SYSTEMEN
APPAREIL DE COMMANDE DE SYSTÈMES DE GESTION DE BÂTIMENT, DE DOMOTIQUE RÉSIDENTIELLE ET DE SYSTÈMES IDO

(43) Date of publication of application: 03.07.2019
(73) Proprietor: Lux Italia Srl, 20040 Cambiago (Milan) (IT)
(72) Inventor: Rancic, Gordan, 20056 Trezzo sull'Adda (MI) (IT)
(74) Representative: Dall'Olio, Christian

(56) References cited:
- EP-A1- 1 993 034
- DE-A1-102004 005 962
- US-A1- 2017 212 487

## Description

### BACKGROUND OF THE INVENTION

### Field of the Invention

The present invention relates to apparatus for control of building management systems, residential domotics and IoT systems. With "building and residential domotics management" is meant sub-system equipment such as HVAC (Heating-Ventilation-Air-Conditioning), illumination, access control, elevators, windows and blinds, fire systems, security systems, power systems, energy monitoring and all other automation systems and sub-systems involved in building and domotics management.

The "IoT" means the network of physical devices, vehicles, home appliances, and other items embedded with electronics, software, sensors, actuators, and network connectivity which enable these objects to connect and exchange data.

### Description of Prior Art

Building Management System (from now on "BMS"), residential control system (from now on "domotics") and Internet of Things system (from now on IoT) are very similar systems used to control different independent systems inside a building, commercial, industrial and home spaces. According to typology, functionality and similarity, those independent systems are gather in groups. Fire detection system and the network of fire sensors, smoke detection system and the network of smoke sensors and fire extinguish system and number of sprinklers compose a FOR-FAS group. HVAC system controlling building heating, ventilation and air-conditioning. The entire space is divided in ambients (rooms, corridors, lobbies), with a local thermostat unit (with a build-in temperature and humidity sensor) and the HVAC indoor unit with the fan, chiller and heater, and all of them are connected to the HVAC main controller unit from where is possible to configure and control the overall system behavior. Access control system takes care about all elevators, car parking access, visitors access and building intrusion management sub-systems. Each elevator has its own controller that control safety brakes, motor and speed regulator. The group of elevators are controlled and managed by the same controller unit according to flow of the people to ensure the quickest and most efficient access and transport. The car parking system manage access bars, usage of the occupied spaces and cost and payments. Visitor access system is the taking care about security and safety of the people access and movement, while building intrusion system is ensuring the supervision and alarming of different security areas. There are many other BMS and domotics sub systems with the similar structure, such as Building Automation Systems that includes security system, alarm scheduling, energy saving control, power monitoring, pumps and tanks supervision, gas and water control and so on. Illumination system controls entire building illumination, but each room has a separate local controller with a motion and ambient light sensor. External building illumination has the external light sensor and the capability to regulate external illumination intensity according to various night time periods.

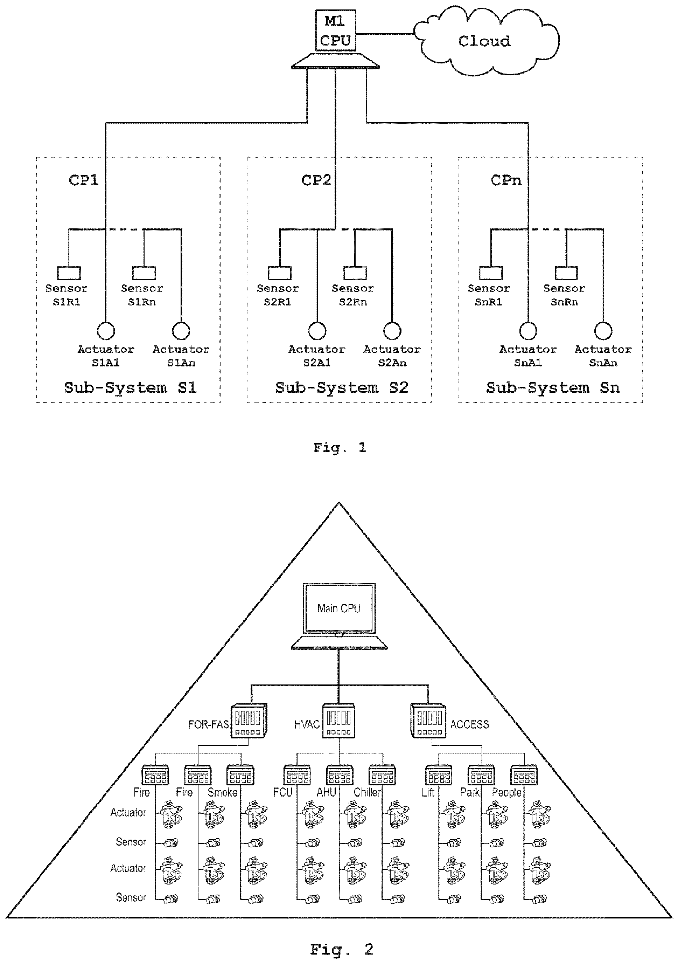

In almost all installations, BMS, domotics and IoT system has a "pyramidal" hardware architecture shown on Fig 2.

As shown on Fig. 2, on the top of the pyramid is located the main CPU, a hardware unit used to supervise and control entire system. Independent BMS sub-systems are gathered in groups according to similarity of functions. For each sub-system, a dedicated controller is used to control and supervise sub-subsystems it is responsible for. At last, each sub-subsystem has its own controller that manages peripheral, field equipment, sensors and actuators.

The main CPU has a role to supervise and control entire system. In order to do it, it must collect information from all peripheral sensors and state of all relevant field actuators, store them in the memory and show them on the display. The single sensor data will be acquired by the sub-subsystem controller. This controller will transfer sensor information to the sub-system group controller, that will transfer the information to the main CPU.

The sub-system controllers and sub-subsystem controllers are preforming similar tasks: acquiring information from the equipment below, executing control algorithm and transfer information about regulation to the controller above.

Depending on a sub-system complexity, regulation algorithm is a single-task and doesn't need particular CPU power.

From the hardware point of view, the main CPU is connected with the sub-system group controllers using local area network and communicating using TCP/IP/UDP communication protocol. Local sub-systems controllers are connected to the single sub-system controllers (Fire, Smoke, FCU, AHU, Chiller, Lift, Park, People) using BMS communication protocols such as BacNET, ArcNET, LonWorks. Single system controllers are communicating with the actuators and sensors using field communication protocols, such as LonWorks, ModBus, ProfiBus, DALI, OpenDMX, DMX512A, CanOpen, and in some cases proprietary and not public-domain. Certain field sensors and actuators are connected directly to the sub-subsystem controller with the digital or analog connections.

The main CPU is equipped with hardware communication interface necessary to be connected with the sub-system controllers, such as Ethernet, and does not need to be equipped with all communication interfaces used in BMS, domotics and IoT installation. In the past, as the power of hardware was improving, the main CPU was based on advanced workstation (in 1990), PC workstation (in 2000) and modern PC (2010). In the meantime, BMS and domotics tasks basically remained the same from the beginning.

The pyramidal architecture obliges all involved hardware to spend time to translate and transfer information from main CPU to field equipment and from field equipment to main CPU in a form of data messages. This is inconvenient and time (resource) spending.

The analysis of the BMS and domotics systems shows that almost half of processing time is used for message translation and communication. Also, almost all sub-systems are running non-real-time tasks. For example, HVAC management is not real-time task. Very few BMS and domotics sub-systems requires real-time execution, such as illumination, fire system and elevators. This brings to the fact that if all the control algorithms, today executed on the local sub-system controllers, would be gathered on the same hardware, that job could be handled by the medium-power hardware.

US 2017/212487 A1 describes a system for self-provisioning building equipment including a main control unit having a processing circuit and a data communications interface and an auxiliary control unit connected with the main control unit via a communications network.

DE 10 2004 005962 A1 discloses a system for controlling a building control system, which has a central control and regulation unit, is directly connected to the building central control and regulation unit via signal lines that are joined to supply units. The supply units are individually controlled by the central control and regulation unit.

EP 1 993 034 A1 discloses a building control module comprising a data structure arranged to define a control mechanism, and at least one of an input interface and an output interface is disclosed. The input interface is enabled to receive input signals from any of one or more input sets associated with at least one of a plurality of control objects. The output interface is enabled to provide output signals to any of one or more output sets associated with at least one of a plurality of control objects. The control mechanism is arranged to process input signals, and to output signals to said output interface. A controller, a control system, a control method, and a computer program are also disclosed.

### SUMMARY OF THE INVENTION

The present invention was made in view of the prior art described above, and a primary object of the present invention is to create a new, standard hardware platform for BMS, domotics and IoT applications. Thanks to the evolving of microprocessor technology, it is possible to build one single hardware unit (system hardware controller) equipped with necessary hardware to be able to execute major number of controlling tasks, connected directly to all peripheral equipment, sensors and actuators. For high-risk tasks or those where the high level of security is requested (i.e. elevators), the local controller will continue to be used.

The system hardware controller is equipped with all necessary hardware to be able to replace traditional main CPU and most of intermediate, sub-system and sub-subsystem controllers. This hardware includes powerful microprocessor, large memory, communication co-processor, video display interface, human interface, communication interfaces that are used in sub-subsystems, such as Ethernet, WiFi, Fiber-Optics, USB, RS485, PLC (power line communication), Bluetooth, ZigBee, KNX, DALI and CAN. Having all the hardware communication support build in, regulation programs running on the same hardware are be able to perform the same tasks previously executed on the separate controllers, eliminating time loose on message and data transfer. The new hardware solution imposes the system architecture. As shown on Fig.1, the new system architecture is composed of system hardware controller (M1), powerful enough to support multi-task jobs in BMS, domotics and IoT applications, hardware network connection interfaces (CP1, CP2, ... CPn) for connection directly to all sub-system field equipment, actuators and sensors. Network connections are supporting communication message transactions directly with the field actuators (S1A1 ... S1An, S2A1 ... S2An, ... SnA1 ... SnAn) and sensors (S1R1 ... S1Rn, S2R1 ... S2Rn, ... SnR1 ... SnRn). The system hardware controller has a graphics user interface and human interface to permit user to supervise or modify environment conditions.

The system hardware controller is interfaced directly to the sub-system peripheral control equipment (actuators and sensors) using filed communication protocols. This includes full hardware and software support. The system hardware controller is equipped with an interface slot, used as a expansion for future hardware interfaces. Since BMS, domotics and IoT environment are evolving continuously, both hardware and software of the system hardware controller are open architecture to meet future applications needs.

### BRIEF DESCRIPTION OF DRAWING

The features of the invention are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a functional schematic of a BMS system architecture with the system hardware controller that replaces all previous controlling hardware and is interfaced directly to field devices and equipment.
Fig. 2 is a functional schematic diagram of a classic BMS system architecture. This approach is in use from the beginning of BMS installation and still is widely applied to all BMS systems worldwide.
Fig. 3 is a block schematic diagram of a system hardware controller
Fig. 4 is a mechanical drawing of a system hardware controller
Fig. 5 is a variant of a physical aspect of a system hardware controller

### DETAILED DESCRIPTION OF THE INVENTION

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

Reference will now be made to the drawing figures to describe the present invention in detail.

The present invention is applied to the BMS, domotics and IoT systems, as shown on Fig. 1. Its goal is to replace traditional BMS, domotics controllers, IoT gateways and sub-system controllers with the unique hardware unit. The system hardware controller is able to run multi-tasking real-time jobs and fully satisfy needs of BMS, domotics and IoT applications. Since different sub-systems are using different connection methods and communication protocols, the present invention includes hardware communication interfaces (CP1, CP2, ... CPn) used in BMS, domotics and IoT environment: Ethernet, WiFi, Bluetooth, ZigBee, Fiber Optics, USB, RS485, PLC (power line communication), KNX, DALI, CAN and supports all field communication protocols: BacNET, ArcNET, LonWorks ModBus, ProfiBus, DALI, OpenDMX, DMX512A, Konnex, CanOpen. The system hardware controller is connected directly actuators (S1A1 ... S1An, S2A1 ... S2An, ... SnA1 ... SnAn) and sensors (S1R1 ... S1Rn, S2R1 ... S2Rn, ... SnR1 ... SnRn) supplied by different manufacturers. To be able to manage different sub-subsystems, the system hardware controller is running parallelly different applications - programs, each one responsible for one sub-subsystem. This system architecture can replace the most of sub-system and sub-subsystem controllers. For the tasks that requires high level of security and time-criticality execution (i.e. elevators), the local sub-system controller will continue to exist and will be interfaced to the system hardware controller.

With the well-defined hardware platform and the dedicated operating system that include drivers and Application Programming Interface for all hardware, it will be very simple, easy and fast to create programs for individual control of all sub-systems. Programs are connected internally by the operating system for real-time data exchange, to reach high level of data integration, that will result in a simplification of the plant and improvement of energy saving. I.e. motion sensor from the illumination plant can activate HVAC unit of the space where people are present, and disactivate or reduce activity of the HVAC plant when there is no one using the area.

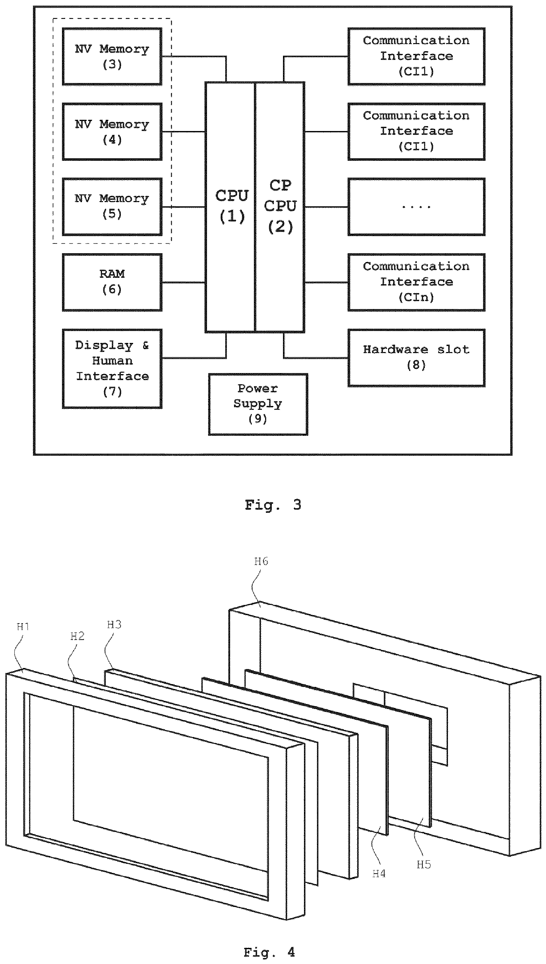

Reference is made to Fig. 3 that is functional block schematic of a MAIN CONTROLLER according to the present invention. The system hardware controller is composed of main microprocessor CPU (1) that can be single or multi-core, peripheral communication processor CP-CPU (2), non-volatile memory for operating system storage (3), non-volatile memory for application software storage (4), non-volatile memory for off-power data storage (5), volatile memory for program execution and temporary data storage (6), graphics user (7), communication hardware interfaces and connection interfaces (CI1 ... CIn), hardware slot for expansions (8) and power supply unit (9).

To facilitate program execution, a very fast, high performance microprocessor is the base line for the system hardware controller . The alternative is multi-core microprocessor, where operating system will handle simultaneous execution on two or more single core units. In the future, due to shrinking of the silicon, better microprocessors will be available permitting enhancement of the performances of the system hardware controller.

Depending on a type of microprocessor and memory chips, non-volatile memory blocks (3, 4, 5) can be separate integrated circuits, integrated inside the same chip or integrated inside the main microprocessor. Usually this memory is realized in FLASH technology, but this does not preclude future non-volatile memory solutions. Also, the old-fashion solution of a mechanical hard disks can be the alternative, even if it is almost out of scope.

The volatile memory (6), traditionally called "RAM" memory, can be an individual stand-alone integrated circuit or integrated inside the main microprocessor CPU and can contain real-time clock data. Real time clock can be integrated as a function of main microprocessor. Real time clock, important function of the system hardware controller, is not physically represented on the drawing, because is usually recreated via software and/or operating system.

Peripheral communication processor (CP-CPU) can be a part of main microprocessor (1) or as a separate integrated circuit, and can be omitted if the main microprocessor is capable to run communication tasks simultaneously together with the execution of other regulation, control and supervision tasks. Modern microprocessors frequently implement main processing unit (single or multicore) and a number of peripheral, smaller processing units, ideal for communication purposes. Communication hardware interfaces and connection interfaces (CI1 ... CIn) are support for network connections, and can be considered both wire and wireless communication interfaces. Wire interfaces can be traditional dedicated wire plants (i.e. Ethernet, RS485) or overlapped signal plants (i.e. power line communication).

To meet requirements of a very small installations, system hardware controller is equipped with local digital and analog I/O connection interfaces used to interface directly field sensors and actuators.

Display and user interface (7) is composed of video display and human input device. Video display can be implemented as an integrated inside the same enclosure together with the rest of the hardware, or externally, as a separated unit. User interface, called also a human device interface, in most cases keyboard, mouse, touch screen, speech recognition device, pushbuttons, joystick or similar device, can be also implemented as a part of the system hardware controller or externally, as a separate device.

The hardware slot (8) is used to permit hardware expansion for applications not supported at a development stage of the system hardware controller The hardware slot is a type of multipolar connector and contains all necessary hardware signal to interface main processor with the hardware not ideated during design of the system hardware controller.

In this way structure of the system hardware controller becomes an "open architecture".

The power supply unit (9) ensures energy supply and distribution to all internal hardware blocks.

Reference is made to Fig. 4, that is the mechanical, physical representation of the MAIN UNIT. The enclosure of the MAIN UNIT (H1, H6), composed of front and back cover, has the scope to protect mechanically internal hardware. The touchscreen glass (H2) used as a human interface device, simplify interaction with the MAIN UNIT, due to similarity to smart tablet and phone devices. Video display (H3) is used to visualize everything the system hardware controller is doing: results, alarms, process status, configuration parameters and so on. Behind the video display the printed circuit board with the all hardware is located (H4). If the physical area of the printed circuit board will not be enough to contain all the hardware, the one or more additional printed circuit boards (H5) can be placed. The printed circuit board must include the power supply unit. The system hardware controller, depending on the type of microprocessor, memory and display, can consume a lot of energy, so the power supply will require a lot of space and good ventilation for power dissipation. For that purpose, it is preferable to include second printed circuit board (H5) where the power supply will be located.

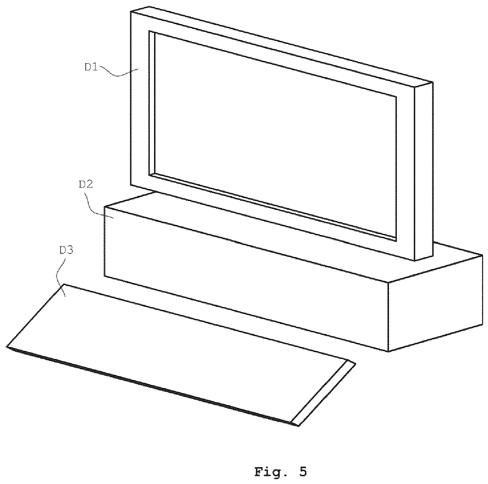

Reference is made to Fig. 5, that is the representation of an alternative physical aspect of the MAIN UNIT, where all the hardware, including the power supply, is placed inside an independent enclosure (D2), while the display (D1) and the human interface device (D3) are separated physically from the hardware box (D1).

To enlarge application field of the system hardware controller, all the electronic components are certified as a "industrial range" components, permitting installation of the system hardware controller in outdoor or extended temperature range applications (-20°C ~ +85°C). That is why the enclosure (H1, H6) must ensure watertight protection. For the classic, indoor applications, a commercial range components and non-watertight enclosure shall be used.

## Claims

1. A Building Management System, BMS, domotics and Internet of Things, loT, system including a system hardware controller and a first plurality of sub-systems connected to the system hardware controller, which first plurality of sub-systems comprises in turn a sub-system for tasks requiring a high level of security and a second plurality of sub-systems;
wherein the system hardware controller comprises:
a central processing unit, CPU;
a volatile memory (6);
a non-volatile memory (3, 4, 5);
a display and user interface (7) composed of video display and human input device; and
a plurality of communication hardware interfaces;
wherein each sub-system of the first plurality of sub-systems includes sensors and actuators;
wherein the sub-system for tasks requiring a high level of security includes also a controller interfaced with the system hardware controller and with the actuators and sensors of the same sub-system for tasks requiring a high level of security;
wherein the sub-systems of the first plurality of sub-systems are configured to use different field communication protocols, and
wherein the plurality of communication hardware interfaces is configured to connect directly to peripheral field devices of the second plurality of subsystems of the BSM, domotics and IoT system;
the system hardware controller is configured to run parallelly different applications - programs, each one responsible for one sub-system;
the system hardware controller is interfaced with the actuators and sensors of the subsystems of the second plurality of sub-systems using plural field communication protocols by means of the plurality of communication hardware interfaces of the system hardware controller,
**characterized in that**
the system hardware controller is configured to regulate and supervise an entire BSM, domotics and IoT system without support of other controllers, except tasks requiring a high level of security

2. The system according to claim 1, wherein each communication hardware interface is configured to be connected to one of the plurality of sub-systems using different field communication protocols.

3. The system according to claim 1, **characterized in that** the system hardware controller is configured to execute all controlling and regulation programs and algorithms for control, regulation and supervision of the entire BMS, domotics and loT system, simultaneously, in multi-tasking and real-time.

4. The system according to claim 1, wherein the system hardware controller includes non-volatile memories configured for operating system storage (3), for application software storage (4), and for off-power data storage (5); and
wherein the volatile memory is for program execution and temporary data storage (6).

5. The system according to claim 1, wherein the system hardware controller is equipped with communication coprocessor (2), in a form of independent chip (single or multi-core) or integrated inside the main microprocessor, configured to handle fast and reliable communication protocol management with the peripheral BMS, domotics and loT devices.

6. The system according to claim 1, wherein the display and the human input device for interaction with the operator are build-in inside an enclosure of the system hardware controller.

7. The system according to claim 1, wherein the display and the human input device are located externally from an enclosure of the system hardware controller where the CPU is build-in.

## Patentansprüche

1. Gebäudeverwaltungssystem (Building Management System, BMS), System zur Wohngebäudeautomation (Domotik) und Internet of Things (IoT)-System, beinhaltend eine System-Hardwaresteuerung und eine erste Vielzahl von Subsystemen, die mit der System-Hardwaresteuerung verbunden sind, wobei die erste Vielzahl von Subsystemen wiederum ein Subsystem für Aufgaben, die ein hohes Sicherheitsniveau erfordern, und eine zweite Vielzahl von Subsystemen umfasst;
wobei die System-Hardwaresteuerung umfasst:
eine zentrale Verarbeitungseinheit (Central Processing Unit, CPU);
einen flüchtigen Speicher (6);
einen nichtflüchtigen Speicher (3, 4, 5);
eine Anzeige- und Bedienschnittstelle (7), bestehend aus einer Videoanzeige und einem menschlichen Eingabegerät (Human Input Device, HID); und
eine Vielzahl von Kommunikationshardware-Schnittstellen;
wobei jedes Subsystem der ersten Vielzahl von Subsystemen Sensoren und Aktuatoren beinhaltet;
wobei das Subsystem für Aufgaben, die ein hohes Sicherheitsniveau erfordern, außerdem eine Steuerung beinhaltet, die mit der System-Hardwaresteuerung und mit den Aktuatoren und Sensoren desselben Subsystems für Aufgaben, die ein hohes Sicherheitsniveau erfordern, verbunden ist;
wobei die Subsysteme der ersten Vielzahl von Subsystemen dafür konfiguriert sind, verschiedene Feldkommunikationsprotokolle zu verwenden, und
wobei
die Vielzahl von Kommunikationshardware-Schnittstellen dafür konfiguriert ist, sich direkt mit peripheren Feldgeräten der zweiten Vielzahl von Subsystemen des BSM-, Domotik- und IoT-Systems zu verbinden;
die System-Hardwaresteuerung dafür konfiguriert ist, parallel verschiedene Anwendungen / Programme auszuführen, die jeweils für ein Subsystem verantwortlich sind;
die System-Hardwaresteuerung mit den Aktuatoren und Sensoren der Subsysteme der zweiten Vielzahl von Subsystemen unter Verwendung mehrerer Feldkommunikationsprotokolle über die Vielzahl von Kommunikationshardware-Schnittstellen der System-Hardwaresteuerung verbunden ist,
**dadurch gekennzeichnet, dass**
die System-Hardwaresteuerung dafür konfiguriert ist, ein gesamtes BSM-, Domotik- und loT-System ohne Unterstützung durch andere Steuerungen zu regeln und zu überwachen, mit Ausnahme von Aufgaben, die ein hohes Sicherheitsniveau erfordern.

2. System nach Anspruch 1, wobei jede Kommunikationshardware-Schnittstelle dafür konfiguriert ist, mit einem Subsystem der Vielzahl von Subsystemen unter Verwendung verschiedener Feldkommunikationsprotokolle verbunden zu werden.

3. System nach Anspruch 1, **dadurch gekennzeichnet, dass** die System-Hardwaresteuerung dafür konfiguriert ist, alle Steuer- und Regelungsprogramme und Algorithmen für die Steuerung, Regelung und Überwachung des gesamten BMS-, Domotik- und IoT-Systems gleichzeitig, im Multi-Tasking-Modus und in Echtzeit auszuführen.

4. System nach Anspruch 1, wobei die System-Hardwaresteuerung nichtflüchtige Speicher beinhaltet, die für die Betriebssystemspeicherung (3), für die Anwendungssoftwarespeicherung (4) und für die Datenspeicherung im Ausschaltzustand (5) konfiguriert sind;
und
wobei der flüchtige Speicher für die Programmausführung und die temporäre Datenspeicherung (6) dient.

5. System nach Anspruch 1, wobei die System-Hardwaresteuerung mit einem Kommunikations-Koprozessor (2) ausgestattet ist, entweder in Form eines unabhängigen (Einzelkern- oder Mehrkern-)Chips oder in den Haupt-Mikroprozessor integriert, der dafür konfiguriert ist, die schnelle und zuverlässige Verwaltung des Kommunikationsprotokolls mit den Peripheriegeräten des BMS-, Domotik- und IoT-Systems zu handhaben.

6. System nach Anspruch 1, wobei die Anzeige und das menschliche Eingabegerät für die Interaktion mit der Bedienperson innerhalb eines Gehäuses der System-Hardwaresteuerung eingebaut sind.

7. System nach Anspruch 1, wobei die Anzeige und das menschliche Eingabegerät außerhalb eines Gehäuses der System-Hardwaresteuerung angeordnet sind, in dem die CPU eingebaut ist.

## Revendications

1. Un système de Gestion Technique de Bâtiments, GTB, domotique et Internet des Objets, IdO, comprenant un contrôleur matériel de système et une première pluralité de sous-systèmes connectés au contrôleur matériel de système, ladite première pluralité de sous-systèmes comprend à son tour un sous-système pour les tâches requérant un haut niveau de sécurité et une deuxième pluralité de sous-systèmes ;
où le contrôleur matériel de système comprend :
une unité centrale de traitement, CPU ;
une mémoire volatile (6) ;
une mémoire non volatile (3, 4, 5) ;
un écran et une interface utilisateur (7) composés d'un écran vidéo et d'un dispositif d'entrée humaine ; et
une pluralité d'interfaces matérielles de communication ; où chaque sous-système de la première pluralité de sous-systèmes comprend des capteurs et des actionneurs ;
où le sous-système pour les tâches requérant un haut niveau de sécurité comprend également un contrôleur interfacé avec le contrôleur matériel de système et avec les actionneurs et capteurs du même sous-système pour les tâches requérant un haut niveau de sécurité ;
où les sous-systèmes de la première pluralité de sous-systèmes sont configurés pour utiliser différents protocoles de communication de champ, et
où la pluralité d'interfaces matérielles de communication est configurée pour se connecter directement à des périphériques de champ de la deuxième pluralité de sous-systèmes du système GTB, domotique et IdO ;
le contrôleur matériel de système est configuré pour exécuter en parallèle différentes applications - programmes, dont chacun est responsable d'un sous-système ;
le contrôleur matériel de système est interfacé avec les actionneurs et capteurs des sous-systèmes de la deuxième pluralité de sous-systèmes en utilisant plusieurs protocoles de communication de champ à travers la pluralité d'interfaces matérielles de communication du contrôleur matériel de système,
**caractérisé en ce que**
le contrôleur matériel de système est configuré pour réguler et superviser tout un système GTB, domotique et IdO sans le support d'autres contrôleurs, sauf pour les tâches requérant un haut niveau de sécurité.

2. Le système selon la revendication 1, dans lequel chaque interface matérielle de communication est configurée pour être connectée à un sous-système de la pluralité de sous-systèmes en utilisant différents protocoles de communication de champ.

3. Le système selon la revendication 1, **caractérisé en ce que** le contrôleur matériel de système est configuré pour exécuter tous les programmes et algorithmes de contrôle et de régulation pour le contrôle, la régulation et la supervision de tout le système GTB, domotique et IdO, simultanément, en multitâche et en temps réel.

4. Le système selon la revendication 1, dans lequel le contrôleur matériel de système comprend des mémoires non volatiles configurées pour le stockage du système d'exploitation (3), pour le stockage du logiciel d'application (4), et pour le stockage des données hors tension (5) ; et
dans lequel la mémoire volatile est destinée à l'exécution des programmes et au stockage des données temporaires (6).

5. Le système selon la revendication 1, dans lequel le contrôleur matériel de système est équipé d'un coprocesseur de communication (2), sous la forme d'une puce indépendante (monocœur ou multicœur) ou intégrée à l'intérieur du microprocesseur principal, configuré pour prendre en charge la gestion rapide et fiable des protocoles de communication avec les périphériques GTB, domotique et IdO.

6. Le système selon la revendication 1, dans lequel l'écran et le dispositif d'entrée humaine pour l'interaction avec l'opération sont intégrés dans un boîtier du contrôleur matériel de système.

7. Le système selon la revendication 1, dans lequel l'écran et le dispositif d'entrée humaine sont situés à l'extérieur d'un boîtier du contrôleur matériel de système où la CPU est intégrée.
